# EUROPEAN PATENT APPLICATION

(11) **EP 4 502 726 A1**
(43) Date of publication of application: **05.02.2025**
(21) Application number: 23779845.9
(22) Date of filing: 20.03.2023
(51) Int. Cl.: G03B 13/02, G03B 17/18, H04N 23/63, H04N 23/69

(54) **INFORMATION PROCESSING DEVICE, INFORMATION PROCESSING METHOD, AND PROGRAM**

(30) Priority: 31.03.2022 JP 2022059247
(71) Applicant: Sony Group Corporation, Tokyo 108-0075 (JP)
(72) Inventor: ODA, Yasumasa, Tokyo 108-0075 (JP); TAKEUCHI, Ryosuke, Tokyo 108-0075 (JP); GOGO, Hiromi, Tokyo 108-0075 (JP); KAWANO, Jiro, Tokyo 108-0075 (JP)
(74) Representative: D Young & Co LLP
(86) International application number: PCT/JP2023/010908
(87) International publication number: WO 2023/189829

(57) **Abstract**

An information processing device configured to simultaneously display a plurality of frames indicating a plurality of zoom magnifications, respectively, in a camera on a display on which a through image is displayed.

## Description

### TECHNICAL FIELD

The present technology relates to an information processing device, an information processing method, and a program.

### BACKGROUND ART

Normally, in a camera function installed on a smartphone and the like, a through image is displayed on a display in an imaging standby state, and when various input operations are performed by a user on the display also serving as an input unit, a zoom magnification is changed according to the input operations.

Furthermore, Patent Document 1 discloses a user interface (UI) corresponding to the change in zoom magnification. In the technology disclosed in Patent Document 1, a display screen of a liquid crystal monitor is divided into a main area and three sub areas vertically arranged on a right side of the main area, in which a normal through image is displayed in the main area, and a plurality of assumed zoom images having angles of view according to different zoom magnifications is displayed in the sub areas, respectively.

### CITATION LIST

### PATENT DOCUMENT

Patent Document 1: Japanese Patent Application Laid-Open No. 2007-173888

### SUMMARY OF THE INVENTION

### PROBLEMS TO BE SOLVED BY THE INVENTION

However, in the technology disclosed in Patent Document 1, since a plurality of through images having different zoom magnifications is displayed in the sub areas, both the normal through image in the main area and the through image in each sub area are made small, and there is a problem that it is difficult to check the through image in the zoom state. Furthermore, since the through images of the respective magnifications are displayed in different areas, there is also a problem that it is difficult to simultaneously and timely check the subject appearing in each through image.

The present technology has been achieved in view of such problem, and an object thereof is to provide an information processing device, an information processing method, and a program capable of easily checking the through image in a state of being zoomed at a plurality of different zoom magnifications.

### SOLUTIONS TO PROBLEMS

In order to solve the above-described problem, a first technology is an information processing device configured to simultaneously display a plurality of frames indicating a plurality of zoom magnifications, respectively, in a camera on a display on which a through image is displayed.

Furthermore, a second technology is an information processing method configured to simultaneously display a plurality of frames corresponding to a plurality of zoom magnifications respectively, in a camera on a display on which a through image is displayed.

Moreover, a third technology is a program that allows a computer to execute an information processing method of simultaneously displaying a plurality of frames indicating a plurality of zoom magnifications, respectively, in a camera on a display on which a through image is displayed.

### BRIEF DESCRIPTION OF DRAWINGS

Fig. 1 is a block diagram illustrating a configuration of an information processing device 100.
Fig. 2 is a view illustrating a camera UI displayed on a display 105.
Fig. 3 is a view illustrating the camera UI when executing lens selection.
Fig. 4 is a view illustrating the camera UI when executing zooming.
Fig. 5 is a view illustrating a zoom UI of the present technology displayed on the display 105.
Fig. 6 is a view illustrating an aspect ratio of a zoom frame.
Fig. 7 is a view illustrating display transition in a case where the zoom frame is selected in the zoom UI.
Fig. 8 is a view illustrating transition of zoom display.
Fig. 9 is an illustrative view of an example in which a zoom magnification of the zoom frame changes according to switching of a lens.
Fig. 10 is an illustrative view of an example in which the zoom magnification of the zoom frame changes according to a change in zoom magnification.
Fig. 11 is an illustrative view of an example in which the zoom magnification of the zoom frame changes according to a change in zoom magnification.
Fig. 12 is an illustrative view of display of the zoom frame according to a subject detection result.
Fig. 13 is an illustrative view of a zoom frame recommended for preventing unintended appearance.
Fig. 14 is an illustrative view of a zoom frame recommended in a case where an area of a detected subject is square.
Fig. 15 is an illustrative view of a zoom frame recommended in a case where a moving speed of a subject is high.
Fig. 16 is an illustrative view of an example of displaying the zoom frame according to an area input by the user.
Fig. 17 is a view illustrating an example in which there is three zoom frames.
Fig. 18 is a view illustrating an example of determining a size of the zoom frame according to the zoom magnification.
Fig. 19 is a view illustrating an example of emphasizing the zoom frame according to a type of zooming.

### MODE FOR CARRYING OUT THE INVENTION

Hereinafter, an embodiment of the present technology is described with reference to the drawings. Note that, the description is given in the following order.
<1. Embodiment>
[1-1. Configuration of Information Processing Device 100]
[1-2. Camera UI]
[1-3. Zoom UI]
[1-3-1. Configuration of Zoom UI]
[1-3-2. Zooming based on Zoom Frame]
[1-3-3. Display of Zoom Frame according to Subject Detection Result]
[1-3-4. Another Example of Zoom Frame Display]
<2. Variation>

### <1. Embodiment>

### [1-1. Configuration of Information Processing Device 100]

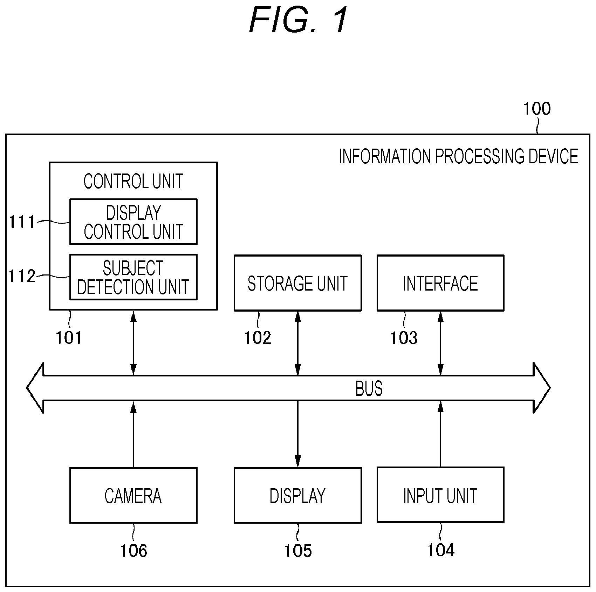

A configuration of an information processing device 100 is described with reference to Fig. 1. The information processing device 100 is a device that performs display control of a zoom UI of the present technology. The information processing device 100 at least includes a control unit 101, a storage unit 102, an interface 103, an input unit 104, a display 105, and a camera 106.

The control unit 101 includes a central processing unit (CPU), a random access memory (RAM), a read only memory (ROM) and the like. The CPU executes various pieces of processing according to a program stored in the ROM and issues commands, thereby controlling an entire information processing device 100 and each unit thereof. Furthermore, the control unit 101 also performs processing as a display control unit 111 and a subject detection unit 112. Note that, the display control unit 111 and the subject detection unit 112 may be configured as dedicated processing blocks different from the control unit 101.

The storage unit 102 is, for example, a large-capacity storage medium such as a hard disk and a flash memory. The storage unit 102 stores various applications, programs, data and the like used in the information processing device 100.

The interface 103 is an interface with the Internet, another device and the like. The interface 103 may include a wired or wireless communication interface. More specifically, the wired or wireless communication interface may include cellular communication, Wi-Fi, Bluetooth (registered trademark), near field communication (NFC), Ethernet (registered trademark), high-definition multimedia interface (HDMI (registered trademark)), universal serial bus (USB) and the like. Furthermore, in a case where the information processing device 100 is implemented in a distributed manner on a plurality of devices, the interface 103 may include different types of interfaces for the respective devices. For example, the interface 103 may include both a communication interface and an interface in a device.

The input unit 104 is a unit for the user to input various instructions to the information processing device 100. When the user performs the input on the input unit 104, a control signal corresponding to the input is generated and supplied to the control unit 101. Then, the control unit 101 performs various types of processing corresponding to the control signal. In this embodiment, it is assumed that the information processing device 100 includes a touch screen integrally configured with the display 105 as the input unit 104. Note that, the information processing device 100 includes hardware buttons such as a power button and a volume adjustment button in addition to the touch screen.

The display 105 displays a camera UI, a zoom UI according to the present technology, an application operating in the information processing device 100, a setting screen of the information processing device 100 and the like.

The camera 106 is a camera including an imaging element, a signal processing circuit and the like and capable of imaging a still image and a moving image. While the camera 106 is activated, an image imaged by the camera 106 is displayed as a through image on the display 105. The through image is also referred to as a live view image.

In this embodiment, it is assumed that the information processing device 100 includes a plurality of lenses having different angles of view and focal distances, and can switch the lenses on the basis of the input of the user. In this embodiment, it is assumed that the information processing device 100 includes three lenses including a standard lens, a telephoto lens, and a wide-angle lens.

The camera 106 can image while changing a zoom magnification. The zooming includes optical zooming and digital zooming. The optical zooming is a method of zooming without enlarging an image by changing a distance (focal distance) from a center point of a lens to an imaging element. It is possible to enlarge a subject while suppressing deterioration in image quality as compared with the digital zooming. The digital zooming is a method of zooming by enlarging an image by image processing. The camera 106 can also zoom by combining the optical zooming and digital zooming.

Note that, in a case where the information processing device 100 includes a plurality of lenses, the plurality of lenses is arranged vertically or horizontally in a housing of the information processing device 100, so that a deviation in parallax occurs between the lenses. Therefore, it is preferable to record a deviation amount in the information processing device 100 in advance at a manufacturing step of the information processing device 100, and correct the deviation by processing in an application of the camera 106.

The display control unit 111 performs processing of displaying the zoom UI of the present technology on the display 105. As will be described later in detail, the display control unit 111 also determines a position and a size of the zoom frame forming the zoom UI, determines the zoom magnification indicated by the zoom frame and the like in order to display the zoom UI.

The subject detection unit 112 performs processing of detecting the subject. The subject detection unit 112 can detect a subject on the basis of an input image output from the imaging element of the camera 106. Furthermore, the subject detection unit 112 can detect the subject on the basis of the through image generated on the basis of the input image output from the imaging element of the camera 106. The subject can be detected by a method using machine learning or deep learning, a method using template matching, a matching method based on luminance distribution information of the subject, a method using artificial intelligence and the like. Furthermore, the information processing device 100 may have a function of calculating a speed of the subject on the basis of a subject detection result and the like.

The information processing device 100 is configured in the above-described manner. The information processing device 100 includes a smartphone, a tablet terminal, a personal computer, a wearable device, a portable game machine, a camera dedicated machine and the like. In this embodiment, the information processing device 100 is described as a smartphone. Furthermore, the information processing device 100 may include various sensors such as a distance sensor as necessary. Note that, the information processing device 100 may be an external device that performs display control of the zoom UI.

In a case where there is a program necessary for the processing according to the present technology, the program may be installed in the information processing device 100 in advance, or may be distributed by download, a storage medium and the like and installed by the user himself/herself.

In this embodiment, the information processing method may be implemented by executing the program in the information processing device 100 having a function as a computer. The program may be installed in the information processing device 100 in advance, or may be distributed by download, a storage medium and the like and installed by the user himself/herself.

### [1-2. Camera UI]

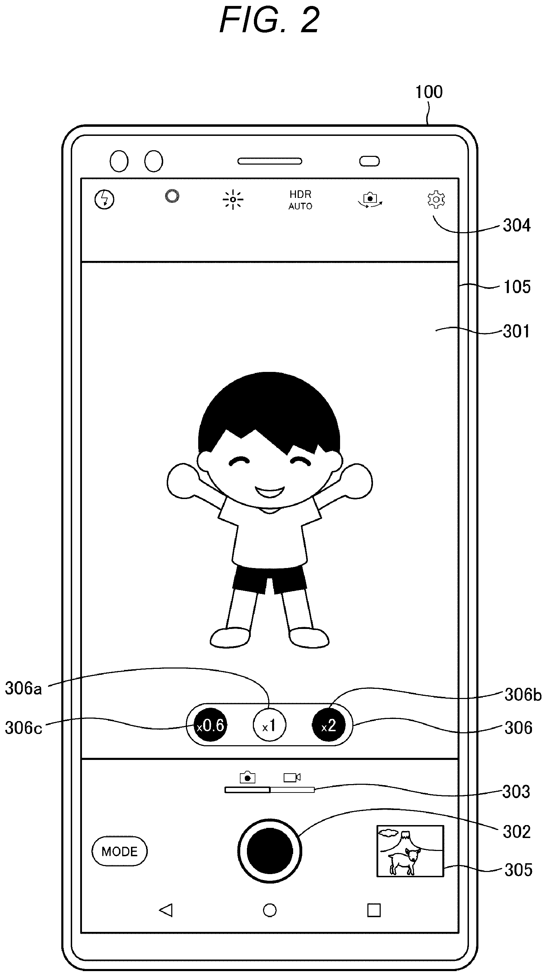

Next, a camera UI displayed on the display 105 when the camera 106 is activated in the information processing device 100 is described. Fig. 2 illustrates a state in which the camera UI is displayed on the display 105.

The camera UI includes a through image display area 301, a shutter button 302, a still image/moving image switch button 303, a function button group 304, a thumbnail display button 305, a zoom magnification adjustment button 306 and the like.

In the through image display area 301, the through image imaged by the camera 106 with a currently used lens at a current zoom magnification is displayed. The through image display area 301 indicates an angle of view, which is an imaging range, and the user can image while checking a state of the subject, the angle of view and the like by looking at the through image. Note that, the user can change an aspect ratio of the through image display area 301 by an input to the function button group 304 and the like.

The shutter button 302 is a button that functions as a shutter for the user to input an imaging instruction. When the user performs an input on the shutter button 302, the camera 106 can image to obtain an image of an angle of view displayed in the through image display area 301. Note that, a hardware button included in the information processing device 100 may function as the shutter button 302.

The still image/moving image switch button 303 is a button for the user to switch the camera 106 to either a still image imaging mode or a moving image imaging mode. When the user performs an input on the button indicating each mode, the information processing device 100 switches the imaging mode of the camera 106 to the mode indicated by the button on which the input is performed. Note that, in addition to this, the imaging mode may include a panoramic image imaging mode, a slow moving image imaging mode, a time-lapse imaging mode and the like. Furthermore, the imaging mode may be switched by a swipe operation to left and right on the touch screen, which is the input unit 104.

The function button group 304 includes a plurality of buttons for turning on/off and setting various functions of the camera 106. Examples of the functions include, for example, a change in aspect ratio of the through image display area 301, flash on/off, blur adjustment, hue/brightness adjustment, high dynamic range (HDR) on/off, detailed settings and the like. Note that, the function is not limited thereto, and any function related to the camera 106 is available.

The thumbnail display button 305 displays a thumbnail of an imaged still image (moving image). When the user performs a tap input on the thumbnail display button 305, an image saving application is activated in the information processing device 100, and the still image (moving image) displayed as the thumbnail is displayed on an entire screen of the display 105.

The zoom magnification adjustment button 306 is a button on which the user performs an input for adjusting the zoom magnification of the camera 106. As described above, since the information processing device 100 includes a plurality of lenses, the zoom magnification adjustment button 306 includes the number of buttons corresponding to the number of lenses included in the information processing device 100 in a default state. In this embodiment, since the information processing device 100 includes three lenses, as the zoom magnification adjustment button 306, there are three buttons including a first zoom magnification adjustment button 306a, a second zoom magnification adjustment button 306b, and a third zoom magnification adjustment button 306c.

On each of the first zoom magnification adjustment button 306a, the second zoom magnification adjustment button 306b, and the third zoom magnification adjustment button 306c, the zoom magnification of the corresponding lens is displayed in a superimposing manner. The first zoom magnification adjustment button 306a corresponds to the standard lens of unity zoom magnification, and the zoom magnification of "×1" indicating unity magnification is displayed in a superimposing manner by default. The second zoom magnification adjustment button 306b corresponds to the telephoto lens of twofold zoom magnification, and the zoom magnification of "×2" indicating twofold magnification is displayed in a superimposing manner by default. The third zoom magnification adjustment button 306c corresponds to the wide-angle lens of 0.6 fold zoom magnification, and the zoom magnification of "x0.6" indicating 0.6 fold magnification is displayed in a superimposing manner by default. Note that, these 0.6 fold zoom magnification (×0.6) and twofold zoom magnification (×2) are merely examples, and the zoom magnification varies depending on a type of the information processing device 100 and the like.

When the user performs an input on any one of the first zoom magnification adjustment button 306a, the second zoom magnification adjustment button 306b, and the third zoom magnification adjustment button 306c, the information processing device 100 switches a lens to be used to a lens corresponding to the button on which the input is performed. Then, the zoom magnification adjustment button on which the input is performed is highlighted to be distinguished from other zoom magnification adjustment buttons. Therefore, the user can visually check the lens currently being used. Note that, the input of the user that indicates lens switch may be performed by a swipe operation to left and right on the touch screen, which is the input unit 104.

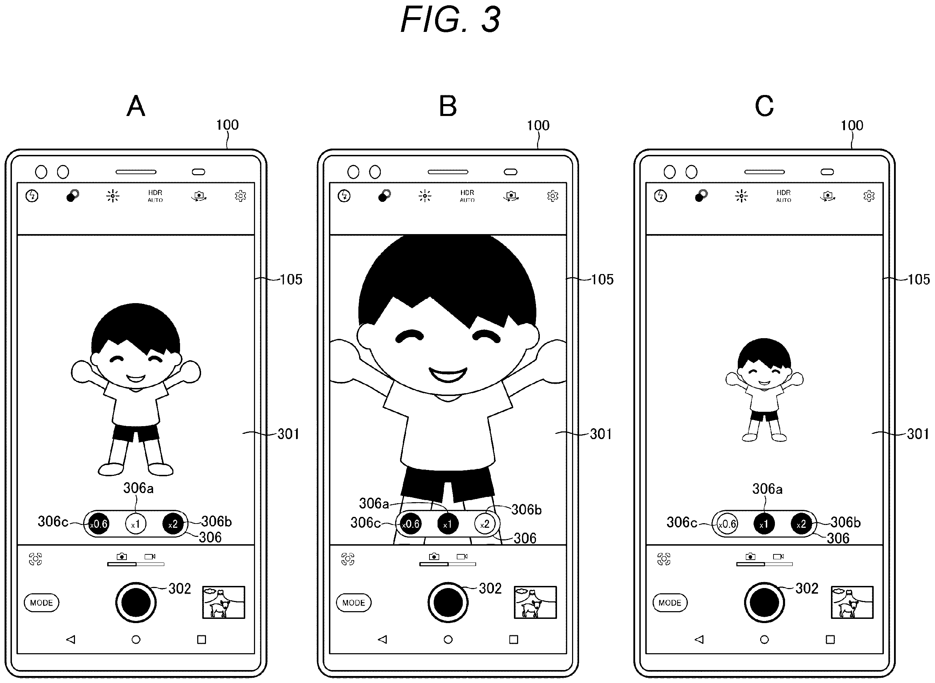

Fig. 3A illustrates a state in which the information processing device 100 uses the standard lens. In this state, the first zoom magnification adjustment button 306a is highlighted. Note that, when the camera 106 is activated in the information processing device 100, the camera UI is first displayed in this state even if the user does not perform a tap input on the first zoom magnification adjustment button 306a.

Fig. 3B illustrates a state in which the information processing device 100 uses the telephoto lens on the basis of the input of the user to the second zoom magnification adjustment button 306b. Since the zoom magnification corresponding to the telephoto lens is twofold magnification, the subject is displayed in a size twice as large as that in Fig. 3A in the through image display area 301. In this state, the second zoom magnification adjustment button 306b is highlighted.

Fig. 3C illustrates a state in which the information processing device 100 uses the wide-angle lens on the basis of the input of the user to the third zoom magnification adjustment button 306c. Since the zoom magnification corresponding to the wide-angle lens is 0.6 fold magnification, the subject is displayed in a size 0.6 times larger than that in Fig. 3A in the through image display area 301. In this state, the third zoom magnification adjustment button 306c is highlighted.

In this manner, the user can adjust the zoom magnification by performing the input on the zoom magnification adjustment button 306 and selecting the lens to be used.

Furthermore, in the camera UI, the user can adjust the zoom magnification by designating a specific value instead of switching the lens.

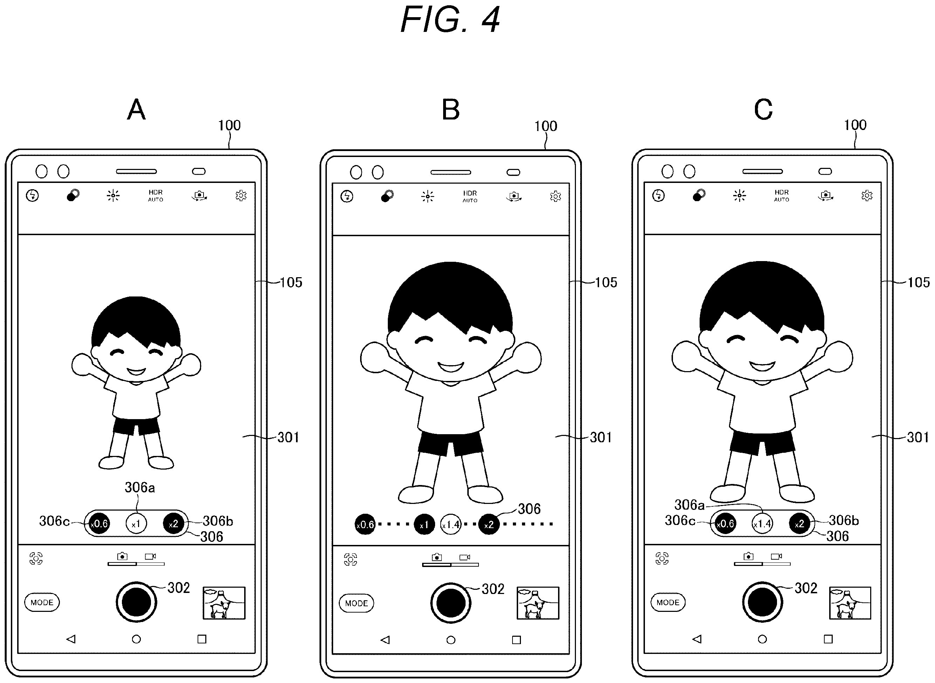

When the user performs a pinch-in/pinch-out operation on the through image display area 301 in a state in which the camera UI is displayed on the display 105 as illustrated in Fig. 4A, the zoom magnification adjustment button 306 transitions to a magnification value designation mode as illustrated in Fig. 4B. The zoom magnification adjustment button 306 in the magnification value designation mode does not correspond to the type of lens, but the zoom magnification is displayed as an icon of continuous points in increments of 0.1, for example, and the current zoom magnification is highlighted together with the magnification value.

Then, the information processing device 100 changes the zoom magnification corresponding to the pinch-in/pinch-out operation of the user on the touch screen as the input unit 104, and also changes the zoom magnification display of the zoom magnification adjustment button 306 corresponding to the change in zoom magnification. Then, when the pinch-in/pinch-out operation of the user ends and the user's finger moves away from the touch screen, as illustrated in Fig. 4C, the zoom magnification adjustment button corresponding to the lens being used is highlighted, and the zoom magnification displayed in a superimposing manner on the zoom magnification adjustment button 306 becomes the zoom magnification input by the user.

Note that, the user can also adjust the zoom magnification by designating a specific zoom magnification by performing a slide operation on the zoom magnification adjustment button 306 in the magnification value designation mode.

In this manner, the user can adjust the zoom magnification in more detail than that when switching the lens. In this embodiment, the camera 106 can zoom up to tenfold magnification. Note that, the tenfold zoom magnification is merely an example, and the maximum zoom magnification may be tenfold magnification or smaller or tenfold magnification or larger.

Furthermore, the user can adjust the zoom magnification by an input to a hardware button included in the information processing device 100.

In the following description, a method of adjusting the zoom magnification by any of the input to the zoom magnification adjustment button 306 in the magnification value designation mode, the pinch-in/pinch-out operation, and the input to the hardware button may be referred to as "another method" in order to distinguish from the adjustment of the zoom magnification by switching the lens and the adjustment of the zoom magnification using the zoom UI of the present technology in some cases.

### [1-3. Zoom UI]

### [1-3-1. Configuration of Zoom UI]

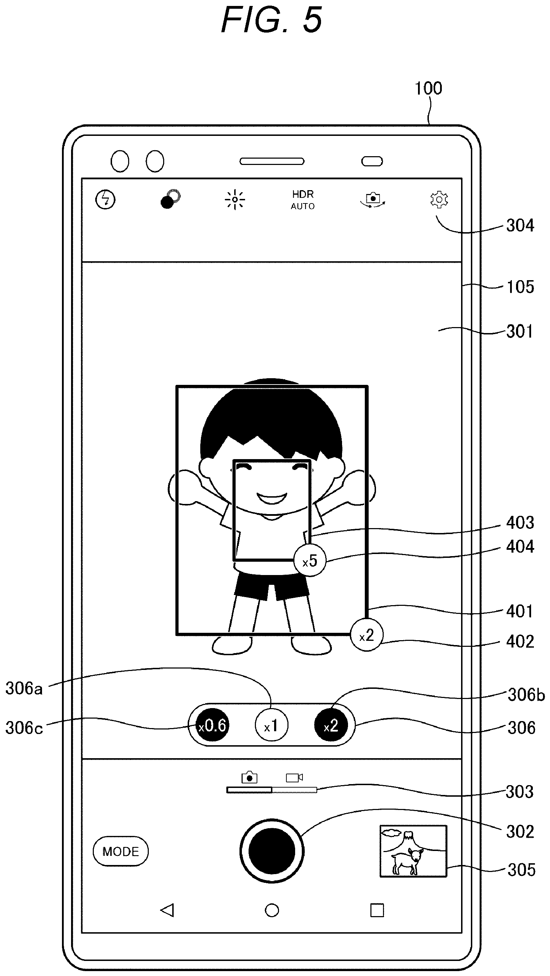

Next, the zoom UI of the present technology displayed on the display 105 by the display control unit 111 is described. Fig. 5 illustrates a state in which the camera 106 is activated in the information processing device 100 and the camera UI and the zoom UI are displayed on the display 105.

The zoom UI includes a first zoom frame 401, a first selection button 402, a second zoom frame 403, and a second selection button 404.

The first zoom frame 401 is a rectangular frame indicating an angle of view, which is an imaging range, in a zoom state. In the example of Fig. 5, the first zoom frame 401 corresponds to twofold zoom magnification. This twofold zoom magnification is a magnification based on unity zoom magnification in a state in which the standard lens is used. In this embodiment, the zoom magnification of the first zoom frame 401 is a fixed value set in advance. The first zoom frame 401 is displayed in such a manner that the center thereof coincides with the center of the through image display area 301.

The first selection button 402 is provided at a lower right corner of the first zoom frame 401, the button for the user to indicate to zoom at the zoom magnification of the first zoom frame 401. The zoom magnification of the corresponding first zoom frame 401 is displayed in a superimposing manner on the first selection button 402. Therefore, the user can grasp the zoom magnification of the first zoom frame 401. Note that, a position of the first selection button 402 is not limited to the lower right corner of the first zoom frame 401, and may be another corner of the first zoom frame 401 or may be on the frame of the first zoom frame 401.

The second zoom frame 403 is a rectangular frame indicating an angle of view, which is an imaging range, in a zoom state. In the example of Fig. 5, the second zoom frame 403 corresponds to fivefold zoom magnification. This fivefold zoom magnification is a magnification based on unity zoom magnification in a state in which the standard lens is used. In this embodiment, the zoom magnification of the second zoom frame 403 is a fixed value set in advance. The second zoom frame 403 is displayed in such a manner that the center thereof coincides with the center of the through image display area 301.

The second selection button 404 is provided at a lower right corner of the second zoom frame 403, the button for the user to indicate to zoom at the zoom magnification indicated by the second zoom frame 403. The zoom magnification of the corresponding second zoom frame 403 is displayed in a superimposing manner on the second selection button 404. Therefore, the user can grasp the zoom magnification of the second zoom frame 403. Note that, a position of the second selection button 404 is not limited to the lower right corner of the second zoom frame 403, and may be another corner of the second zoom frame 403 or may be on the frame of the second zoom frame 403.

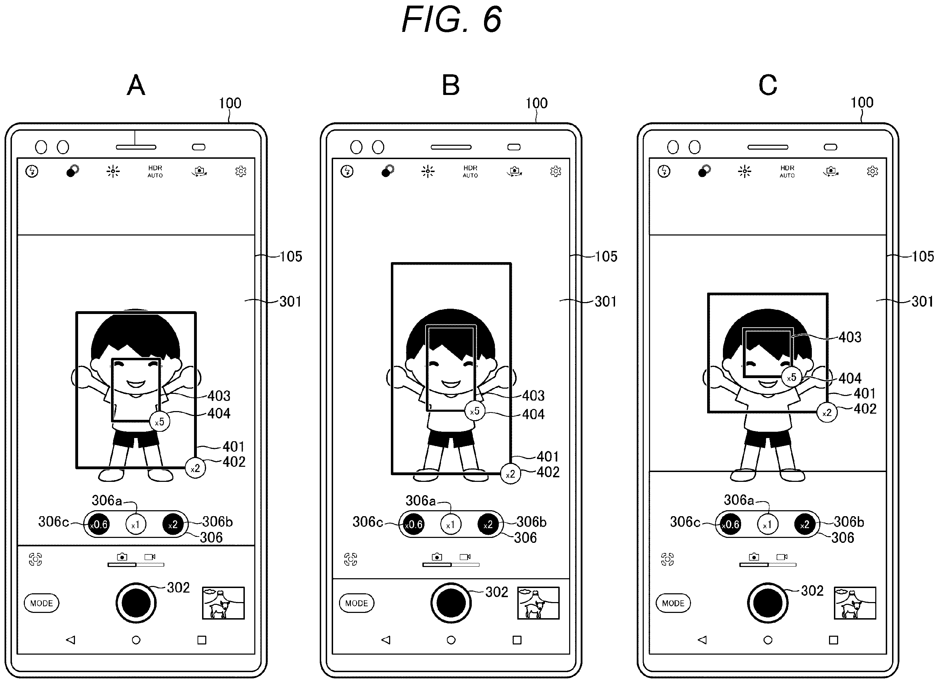

Aspect ratios of the first zoom frame 401 and the second zoom frame 403 are the same as the aspect ratio of the through image display area 301. Therefore, as illustrated in Fig. 6A, in a case where the aspect ratio of the through image display area 301 is 4:3, the first zoom frame 401 and the second zoom frame 403 are also displayed as frames having an aspect ratio of 4:3 on the display 105.

Furthermore, as illustrated in Fig. 6B, in a case where the aspect ratio of the through image display area 301 is 16:9, the first zoom frame 401 and the second zoom frame 403 are also displayed as frames having an aspect ratio of 16:9 on the display 105.

Moreover, as illustrated in Fig. 6C, in a case where the aspect ratio of the through image display area 301 is 1:1, the first zoom frame 401 and the second zoom frame 403 are also displayed as frames having an aspect ratio of 1:1 on the display 105.

In the following description, the aspect ratios of the through image display area 301, the first zoom frame 401, and the second zoom frame 403 are 4:3. Note that, the present technology is not limited to a content in which the aspect ratios of the through image display area 301, the first zoom frame 401, and the second zoom frame 403 are the same.

In this manner, the display control unit 111 simultaneously displays a plurality of zoom frames indicating a plurality of zoom magnifications in the camera 106, respectively, on the display 105 on which the through image is displayed.

In the following description, in a case where it is not necessary to distinguish the first zoom frame 401 and the second zoom frame 403, they are sometimes simply referred to as zoom frames. Furthermore, in a case where it is not necessary to distinguish the first selection button 402 and the second selection button 404, they are sometimes simply referred to as selection buttons.

### [1-3-2. Zooming based on Zoom Frame]

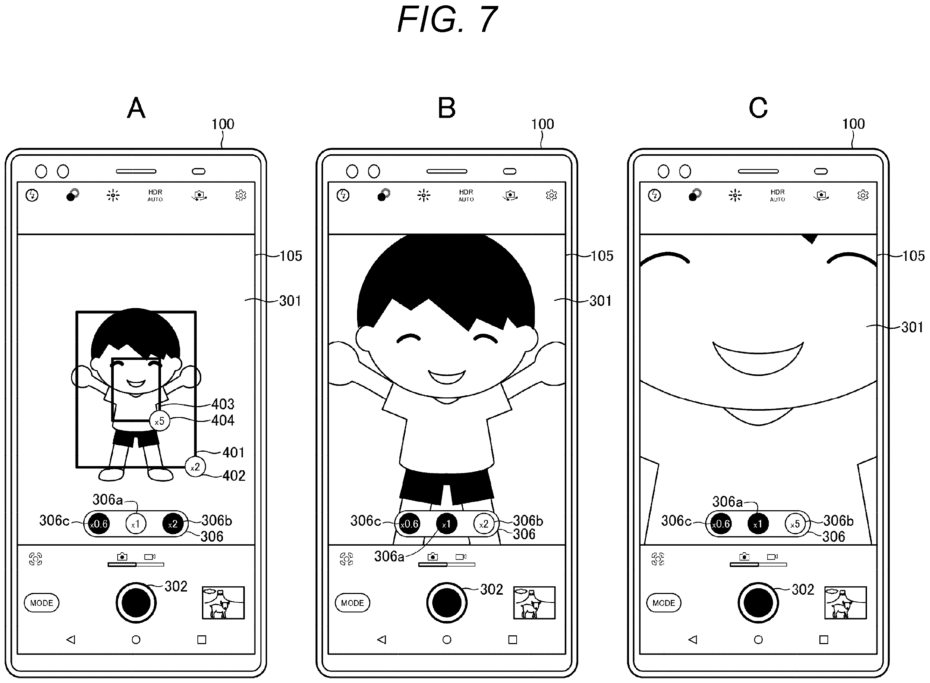

Next, zooming based on the zoom frame will be described. When the user performs an input on the first selection button 402 in a state in which the first zoom frame 401 and the second zoom frame 403 are displayed in the through image display area 301 as illustrated in Fig. 7A, the display in the through image display area 301 transitions to a state (first zoom state) of zooming at the zoom magnification of the first zoom frame 401 as illustrated in Fig. 7B. In this first zoom state, a range enclosed by the first zoom frame 401 is displayed in an entire through image display area 301 as the angle of view, which is the imaging range. When the user performs an input on the shutter button 302 in this state, the camera 106 images with an angle of view zoomed at the zoom magnification of the first zoom frame 401 displayed in the through image display area 301 in Fig. 7B.

Furthermore, when the user performs an input on the second selection button 404 in a state in Fig. 7A, the display in the through image display area 301 transitions to a state (second zoom state) of zooming at the zoom magnification of the second zoom frame 403 as illustrated in Fig. 7C. In this second zoom state, a range enclosed by the second zoom frame 403 is displayed in an entire through image display area 301 as the angle of view, which is the imaging range. When the user performs an input on the shutter button 302 in this state, the camera 106 images with an angle of view zoomed at the zoom magnification of the first zoom frame 401 displayed in the through image display area 301 in Fig. 7C.

In this manner, when either the first zoom frame 401 or the second zoom frame 403 is selected by the user, the through image zoomed at the zoom magnification of the selected zoom frame is displayed in the entire through image display area 301.

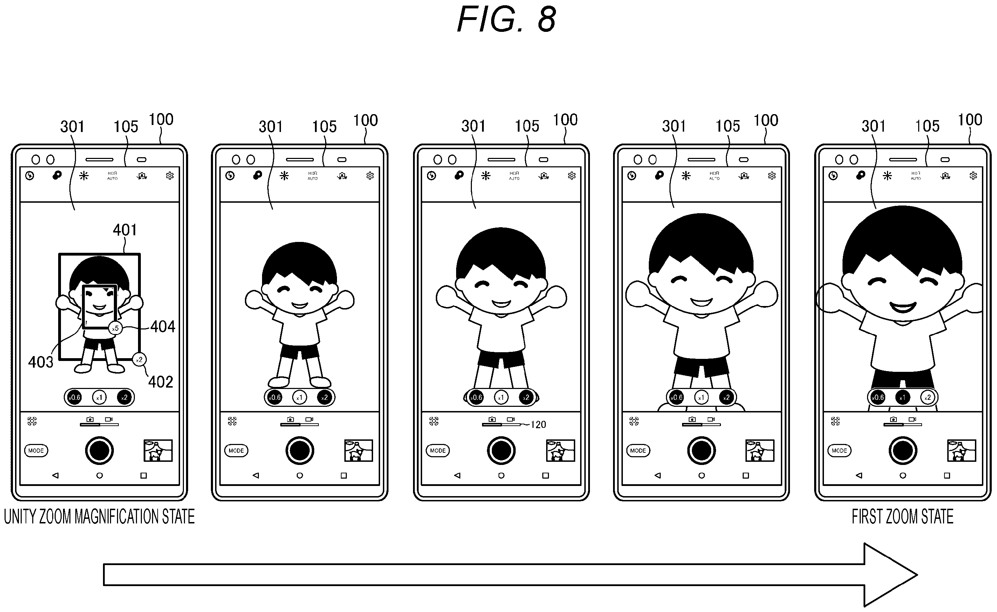

Note that, the transition from the state of unity zoom magnification illustrated in Fig. 7A to the first zoom state illustrated in Fig. 7B may be performed in such a manner that the display is instantaneously switched, or may be performed in such a manner that the state of unity zoom magnification gradually changes to the first zoom state as illustrated in Fig. 8. In a case of the transition as illustrated in Fig. 7, the display of the through image display area 301 is instantaneously switched, so that the user can check the state after the zooming immediately after the input to the first selection button 402. In contrast, in a case where the transition is performed as illustrated in Fig. 8, the user can easily grasp the fact that the zooming is performed and where in the through image display area 301 the zooming is performed. The transition is similar to the transition from the state of unity zoom magnification illustrated in Fig. 7A to the second zoom state illustrated in Fig. 7C.

Note that, in the first zoom state illustrated in Fig. 7B or the second zoom state illustrated in Fig. 7C, in a case where the user performs pinch-in/pinch-out, which is an operation of adjusting the zoom magnification in the camera function of the smartphone in general, the display control unit 111 may cancel the zoom state. Furthermore, the display control unit 111 may cancel the zoom state in response to an input to the volume button included in the information processing device 100 as the input unit 104, an input to the zoom magnification adjustment button 306 in the magnification value designation mode, an input to the first zoom magnification adjustment button 306a, and double tap to any area of the through image display area 301 by the user. Furthermore, the zoom state may be canceled by another input method.

The first selection button 402 and the second selection button 404 may have a function as the shutter button 302. In this case, when the user performs an input on the first selection button 402, the camera 106 zooms at the zoom magnification of the first zoom frame 401 corresponding to the first selection button 402 to image. Therefore, the user can obtain an image imaged with the angle of view indicated by the first zoom frame 401.

Furthermore, when the user performs an input on the second selection button 404, the camera 106 zooms at the zoom magnification of the second zoom frame 403 corresponding to the second selection button 404 to image. Therefore, the user can obtain an image imaged with the angle of view indicated by the second zoom frame 403.

In this manner, in a case where the first selection button 402 and the second selection button 404 also function as the shutter button 302, the camera 106 images at the zoom magnification indicated by the zoom frame selected by the user.

By causing the first selection button 402 and the second selection button 404 to function as the shutter button 302, the user can image by only one input instead of two inputs of inputting to the shutter button 302 after inputting to the first selection button 402 or the second selection button 404.

Note that, in a case where the first selection button 402 and the second selection button 404 also function as the shutter button 302, at the time of imaging, it is possible to display the display in the through image display area 301 in an enlarged manner at the zoom magnification of the zoom frame corresponding to the selection button on which the input is performed or not.

The display control unit 111 determines the zoom magnification corresponding to each of the first zoom frame 401 and the second zoom frame 403 on the basis of the current zoom magnification of the through image displayed in the through image display area 301.

As described above, the information processing device 100 includes three lenses having different zoom magnifications. When the information processing device 100 switches the lens in response to the input to the zoom magnification adjustment button 306 from the user, the current zoom magnification of the through image in the through image display area 301 changes accordingly. The display control unit 111 determines the zoom magnifications of the first zoom frame 401 and the second zoom frame 403 according to the current zoom magnification of the through image.

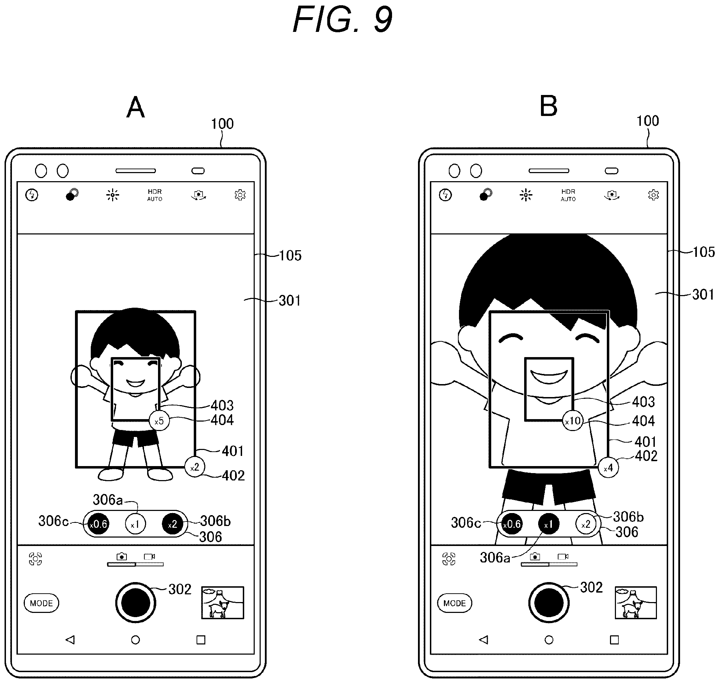

When the lens is switched from the state of using the standard lens illustrated in Fig. 9A (state of unity zoom magnification) to the telephoto lens (twofold zoom magnification), the subject is displayed in a state of being zoomed twofold in the through image display area 301 as illustrated in Fig. 9B. In this state, the information processing device 100 sets the zoom magnification of the first zoom frame 401 to fourfold magnification, which is twice the original zoom magnification (twofold magnification). Furthermore, the display control unit 111 sets the zoom magnification of the second zoom frame 403 to tenfold magnification, which is twice the original zoom magnification (fivefold magnification).

Then, the display control unit 111 sets a numerical value indicating the zoom magnification displayed in a superimposing manner on the first selection button 402 corresponding to the change in zoom magnification to fourfold magnification (×4), and sets the numerical value indicating the zoom magnification displayed in a superimposing manner on the second selection button 404 to tenfold magnification (×10). Note that, there is no change in size of the first zoom frame 401 and the second zoom frame 403 in Figs. 9A and 9B.

Furthermore, also in a case where the user adjusts the zoom magnification by another method described above in addition to switching of the lens, the display control unit 111 determines the zoom magnification of the first zoom frame 401 and the second zoom frame 403 according to this.

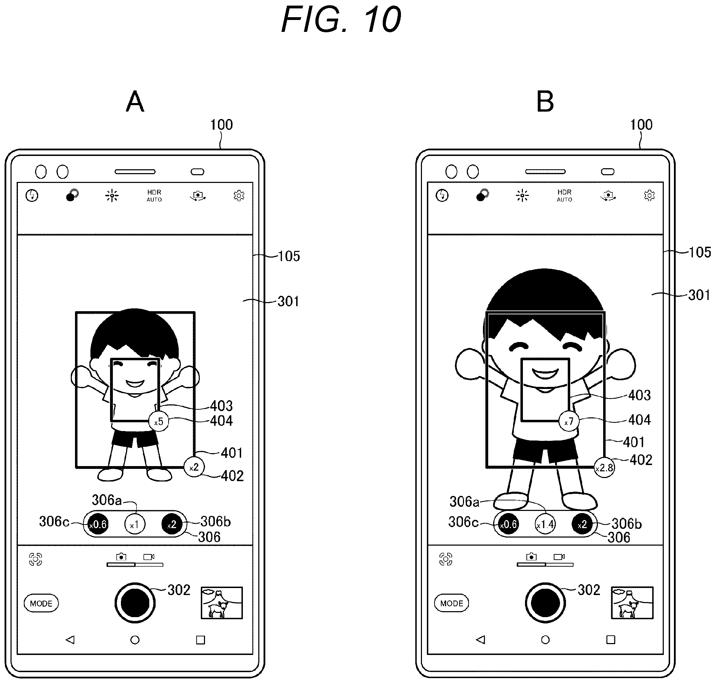

For example, it is assumed that the user sets the zoom magnification to 1.4 fold magnification by another method from a state of unity zoom magnification using the standard lens as illustrated in Fig. 10A. In this case, the display in the through image display area 301 transitions from the state of Fig. 10A to the state of Fig. 10B, and the subject is displayed in a state of being zoomed 1.4 fold.

In response to this, the display control unit 111 sets the zoom magnification of the first zoom frame 401 to 2.8 fold magnification, which is 1.4 times the original zoom magnification (twofold magnification), and sets the zoom magnification of the second zoom frame 403 to sevenfold magnification, which is 1.4 times the original zoom magnification (fivefold magnification). The display control unit 111 sets a numerical value indicating the magnification displayed in a superimposing manner on the first selection button 402 to 2.8 fold magnification (×2.8), and sets the numerical value indicating the magnification displayed in a superimposing manner on the second selection button 404 to sevenfold magnification (×7) corresponding to the change in zoom magnification. Note that, there is no change in size of the first zoom frame 401 and the second zoom frame 403 in Figs. 10A and 10B.

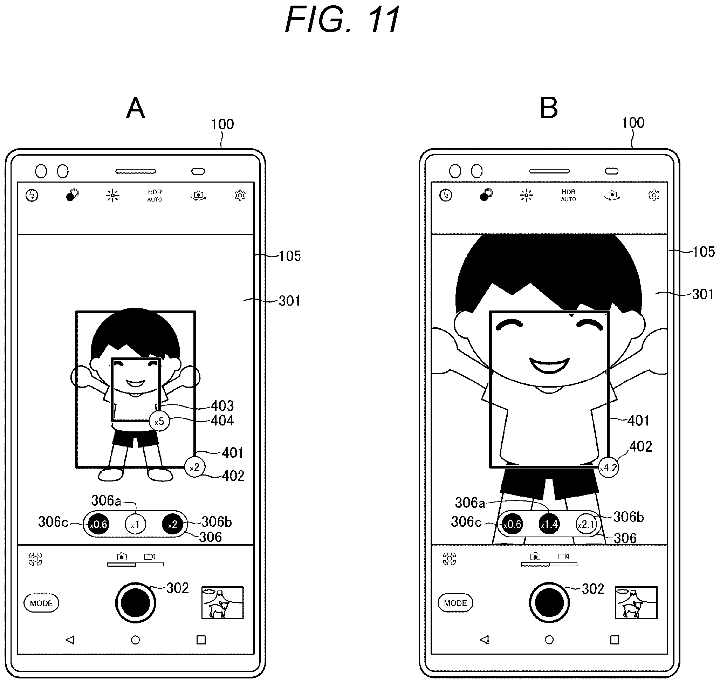

Moreover, when the zoom magnification is set to 2.1 fold magnification by another method, the display in the through image display area 301 transitions from the state of Fig. 11A to the state of Fig. 11B, and the subject is displayed in a state zoomed 2.1 fold.

In this state, the zoom magnification of the second zoom frame 403 is 10.2 fold magnification, which is 2.1 times the original zoom magnification (fivefold magnification). However, in this embodiment, since the maximum zoom magnification is tenfold magnification, the zoom magnification of the second zoom frame 403 cannot be set to tenfold magnification or larger. In this case, as illustrated in Fig. 11B, the display control unit 111 does not display the second zoom frame 403 having a zoom magnification exceeding tenfold magnification but displays only the first zoom frame 401 in the through image display area 301. In a case where the zoom magnification is set to 2.1 fold magnification by another method, the display control unit 111 sets the magnification of the first zoom frame 401 to 4.2 fold magnification, which is 2.1 times the original magnification (twofold magnification). Then, the display control unit 111 sets the numerical value indicating the magnification displayed in a superimposing manner on the first selection button 402 to 4.2 fold magnification (×4.2) in response to the change in zoom magnification.

Note that, the reason why the second zoom frame 403 is not displayed in this manner is that the maximum zoom magnification is described as tenfold magnification, and the second zoom frame 403 continues to be displayed in a case where the maximum zoom magnification is larger or in a case where the original zoom magnification of the second zoom frame 403 is fivefold magnification or smaller.

Note that, as a result of increasing the zoom magnification by another method, in a case where both the zoom magnifications of the first zoom frame 401 and the second zoom frame 403 exceed the maximum zoom magnification, neither the first zoom frame 401 nor the second zoom frame 403 is displayed in the through image display area 301.

### [1-3-3. Display of Zoom Frame according to Subject Detection Result]

Next, display of the zoom frame according to the subject detection result in the zoom UI will be described. The display control unit 111 can display the first zoom frame 401 and the second zoom frame 403 on the display 105 on the basis of the detection result of the subject detection unit 112.

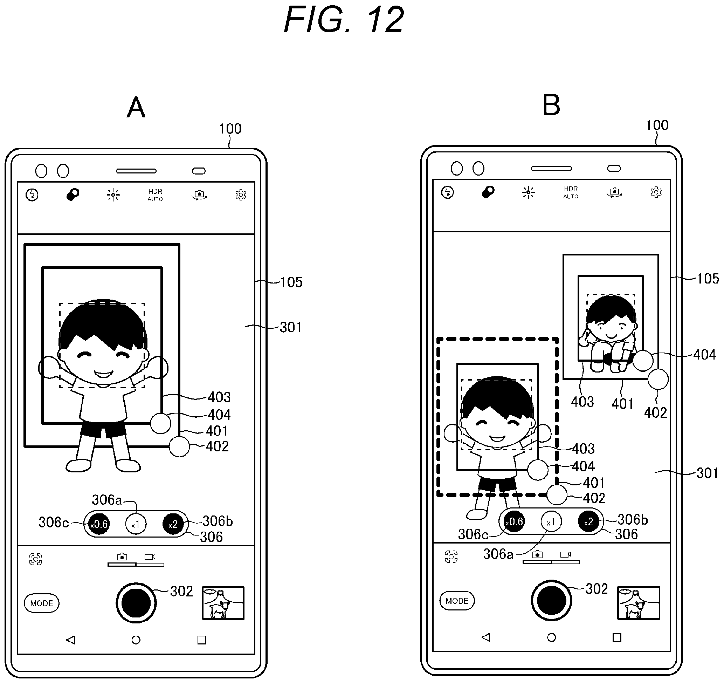

For example, in a case where the subject (for example, a face of a person) is detected as indicated by a broken-line frame in the through image display area 301 in Fig. 12A, the display control unit 111 can display the first zoom frame 401 and the second zoom frame 403 corresponding to the subject area.

Furthermore, in a case where a plurality of subjects (for example, faces of a plurality of persons) is detected as indicated by a broken-line frame in the through image display area 301 in Fig. 12B, the display control unit 111 can display the first zoom frame 401 and the second zoom frame 403 corresponding to each of a plurality of the subject areas.

Note that, in a case where a plurality of subjects is detected and the user makes an input to select any of the subjects (tap input to the subject and the like), the display control unit 111 may display a plurality of zoom frames so as to enclose only the selected subject area.

In this manner, the display control unit 111 determines display positions of the first zoom frame 401 and the second zoom frame 403 corresponding to the position of the detected subject.

In a case where the zoom frame is displayed corresponding to the detected subject, the display control unit 111 can determine the size of the zoom frame on the basis of the size of the subject area, the distance to the subject and the like. For example, it is preferable to display the zoom frame in a size including an entire area of the detected subject in which a margin of a predetermined dimension is generated from the area of the subject in a vertical direction and a horizontal direction. The dimension of the margin may be set in advance in the information processing device 100 or may be set by the user. Therefore, when the detected subject is large, the displayed zoom frame is also large correspondingly, and when the detected subject is small, the displayed zoom frame is also small correspondingly. The zoom magnification corresponding to the zoom frame is determined on the basis of the size of the zoom frame and the current zoom magnification.

In a case where the zoom frame is displayed corresponding to the detected subject, the zoom frame is displayed in such a manner that the center thereof coincides with the center of the area of the subject. Therefore, the center of the zoom frame does not necessarily coincide with the center of the through image display area 301. Furthermore, the center of the through image may coincide with the center of the image after zooming, and the detected subject may be included.

Note that, it is not necessarily required to be displayed in such a manner that the center of the zoom frame coincides with the center of the area of the subject, and for example, the zoom frame may be displayed so as to match a representative photograph composition (diagonal composition, radial composition, Hinomaru (rising sun) composition and the like) using a known composition estimation technique.

In a case where a plurality of zoom frames is displayed corresponding to the detected subject, a zoom frame recommended to the user may be emphasized. The display control unit 111 can determine the recommended zoom frame on the basis of the size of the subject and the distance to the subject, for example. In Fig. 12, a first zoom frame 401 displayed corresponding to the subject on a left side having a larger size is emphasized. Furthermore, the information processing device 100 may determine a zoom frame that matches the representative photograph composition as the recommended zoom frame using a known composition estimation technique.

The zoom frame can be emphasized by, for example, thickening the zoom frame, coloring the zoom frame, blinking the zoom frame and the like. Furthermore, the recommended zoom frame may be emphasized by displaying the same in a display mode different from that of other zoom frames, or may be emphasized by any method as long as the user can distinguish the recommended zoom frame from other zoom frames.

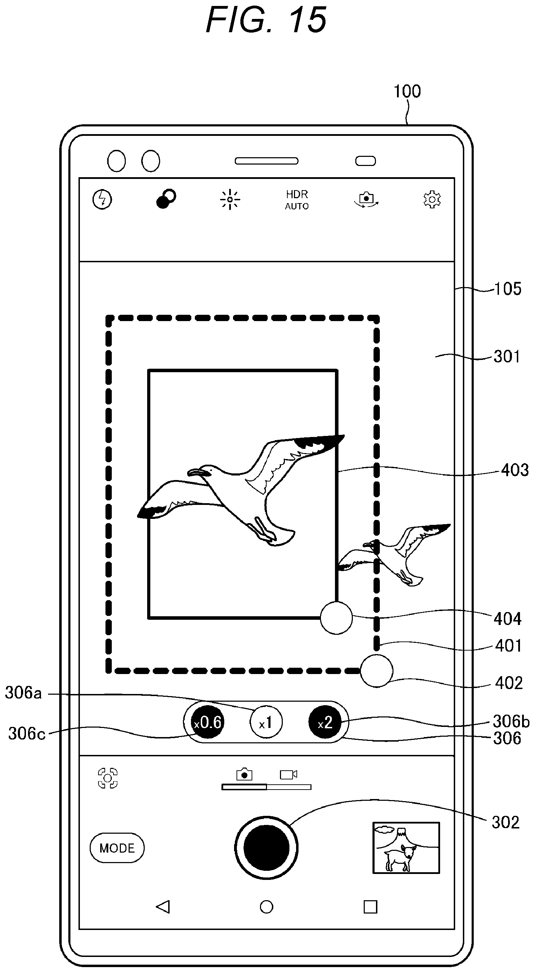

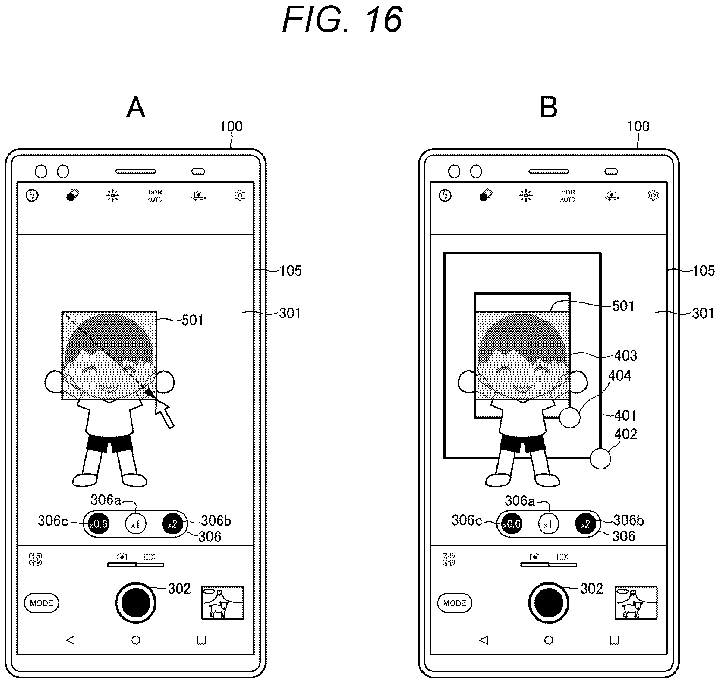

Note that, as illustrated in Fig. 12, in a case where the centers of the first zoom frame 401 and the second zoom frame 403 do not coincide with the center of the through image display area 301 of the subject, it is possible that the numerical value indicating the zoom magnification is not displayed in a superimposing manner on the first selection button 402 and the second selection button 404 or it is possible that this is displayed in a superimposing manner. This is similar in examples in Figs. 15 and 16 to be described later.

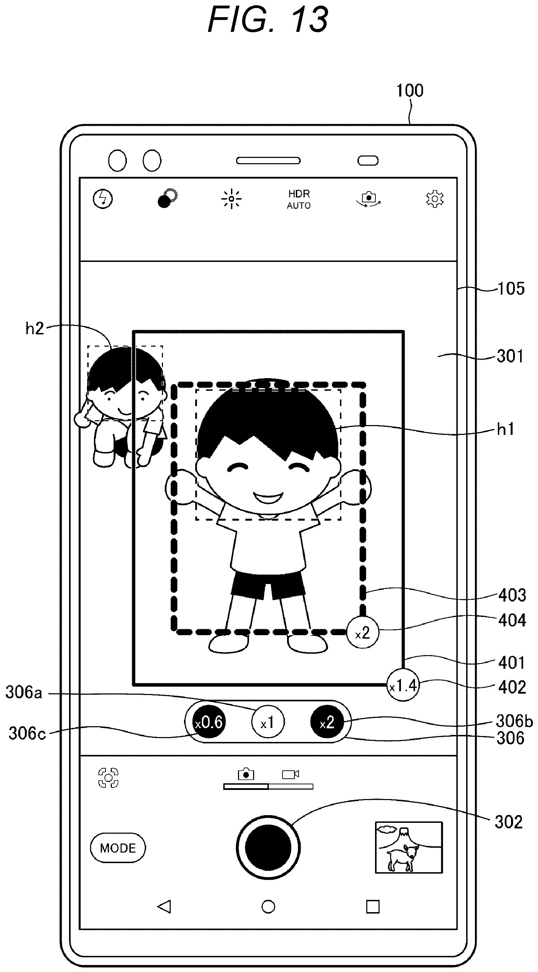

Furthermore, as illustrated in Fig. 13, in a case where a plurality of subjects is detected and a plurality of zoom frames is displayed corresponding to any of the subjects, a zoom frame that does not include a subject other than the subject corresponding to the zoom frame therein may be emphasized and recommended to the user. Therefore, the user can easily grasp the zoom frame to be selected with which unintended appearance can be prevented and an image not including an unnecessary subject can be obtained.

In the example of Fig. 13, a subject h1 and a subject h2 are detected, and the first zoom frame 401 and the second zoom frame 403 are displayed corresponding to the area of the subject h1. Since the first zoom frame 401 includes the subject h2 therein and the second zoom frame 403 does not include the subject h2 therein, the second zoom frame 403 is emphasized.

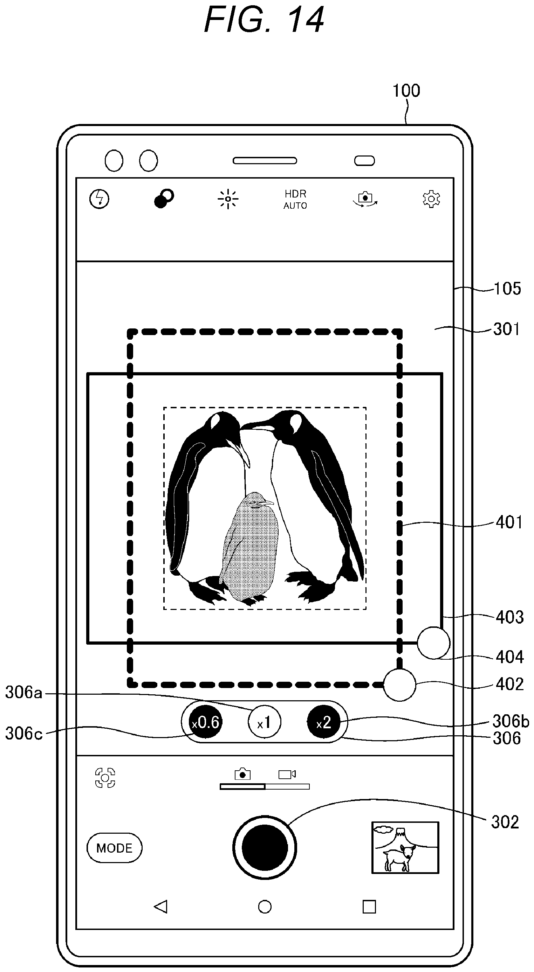

Furthermore, in a case where the area of the detected subject has a square shape or a shape approximate to a square shape, the display control unit 111 may display the first zoom frame 401 and the second zoom frame 403 as a vertical frame and a horizontal frame having different aspect ratios, respectively, as illustrated in Fig. 14. In the example of Fig. 14, a square-shaped subject area is detected as indicated by a broken line, the first zoom frame 401 is displayed as a vertically long frame with an aspect ratio of 4:3, and the second zoom frame 403 is displayed as a horizontally long frame with an aspect ratio of 3:4. In the example of Fig. 14, the vertically long first zoom frame 401 and the horizontally long second zoom frame 403 are displayed in such a manner that the centers thereof coincide with the center of the area of the subject. Moreover, the display control unit 111 may determine a zoom frame that matches the representative photograph composition as the recommended zoom frame using a known composition estimation technique to emphasize. In Fig. 14, the first zoom frame 401 is emphasized. Note that, as illustrated in Fig. 14, since the horizontally long second zoom frame 403 is a frame having an aspect ratio different from that of the through image display area 301 and is not simply a predetermined magnification of the through image display area 301, it is not necessary to display in a superimposing manner the numerical value indicating the zoom magnification on the second selection button 404. Furthermore, in a case where the zoom magnification is not displayed on the second selection button 404, it is not required that the zoom magnification is displayed on the first selection button 402 corresponding to the vertically long first zoom frame 301.

Furthermore, in a case where a plurality of zoom frames is displayed corresponding to the detected subject, and in a case where a moving speed of the subject is high (for example, in a case where the moving speed is equal to or higher than a threshold), it is preferable to emphasize a larger zoom frame out of a plurality of zoom frames and recommend to the user as illustrated in Fig. 15. In a case where the movement of the subject is fast, the subject might be out of the zoom frame, so that it is possible to more reliably image the subject within the zoom frame by recommending a large zoom frame and allowing the user to select the same. Note that, the moving speed of the subject can be calculated from, for example, a difference in position of the subject between frames and the frame rate.

### [1-3-4. Another Example of Zoom Frame Display]

Next, another example of zoom frame display in the zoom UI will be described. As illustrated in Fig. 16A, it is assumed that the user designates a rectangular area 501 having any size in the through image display area 301 by an input to the touch screen as the input unit 104. In this case, the display control unit 111 can display the first zoom frame 401 and the second zoom frame 403 with reference to the designated area 501 as illustrated in Fig. 16B.

In this case, the display control unit 111 displays the second zoom frame 403, which is the smaller zoom frame, at the same aspect ratio as that of the through image display area 301 and in the minimum size including the area 501. Furthermore, this displays the first zoom frame 401, which is the larger zoom frame, at the same aspect ratio as that of the through image display area 301 and in a size of a predetermined multiple based on the size of the second zoom frame 403.

In the camera UI of the smartphone, which is the information processing device 100, normally, when the user performs a tap input on any position of the through image display area 301, an auto exposure/auto focus (AE/AF) function is executed. AE is a function of automatically determining brightness on the basis of a position at which the tap input is performed. AF is a function of automatically focusing on a position at which the tap input is performed.

In the present technology, the first selection button 402 corresponding to the first zoom frame 401 and the second selection button 404 corresponding to the second zoom frame 403 are provided in order to achieve coexistence of AE/AF by the tap input and selection of the zoom frame by the tap input. Therefore, when the user performs the tap input at any position other than the first selection button 402 and the second selection button 404 in the through image display area 301, AE/AF is executed. Furthermore, when the user performs the tap input on the first selection button 402 or the second selection button 404, the zoom frame corresponding to the selection button is selected.

Note that, the selection of the zoom frame by the tap input may be prioritized, and the zoom frame may be selected by performing the tap input at any position in the zoom frame.

Furthermore, AE/AF may be executed according to the tap input of the user at any position in the through image display area 301, and selection of the zoom frame may be executed according to a double tap input of the user at any position in the zoom frame. Furthermore, the selection of the zoom frame may be executed according to the tap input at any position in the zoom frame, and AE/AF may be executed according to a double tap input at any position in the through image display area 301.

Note that, the zoom frame may be displayed in a superimposing manner on the through image displayed in the through image display area 301, or the zoom frame may be displayed in a translucent state by α blending with the through image. By displaying the zoom frame in the translucent state, it is possible to prevent the subject displayed in the through image display area 301 from being hidden by the zoom frame. This is similar for the selection button, and the selection button may be displayed in the translucent state.

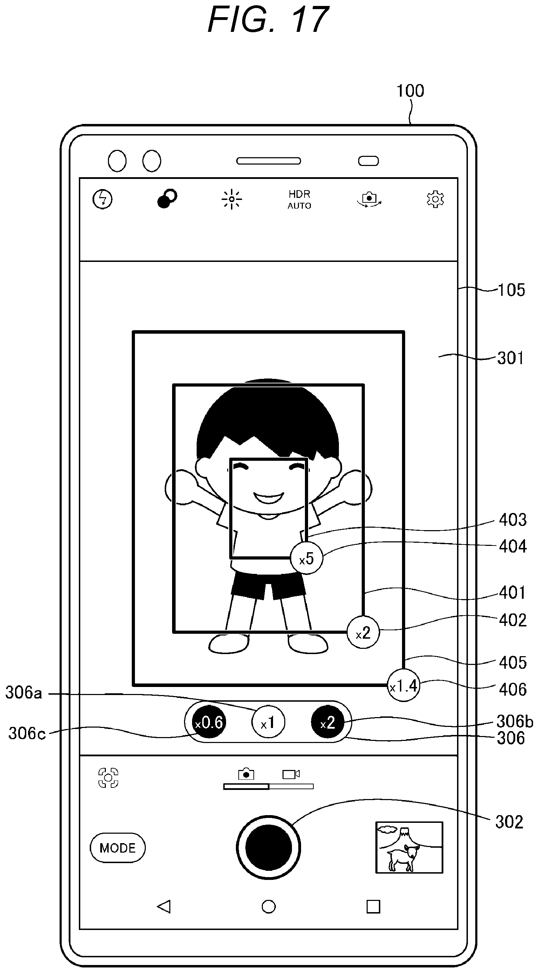

Furthermore, as illustrated in Fig. 17, three zoom frames may be displayed, and any number of zoom frames may be displayed as long as there is a plurality of zoom frames. In Fig. 17, a third zoom frame 405 and a third selection button 406 are further displayed. In the information processing device 100 having a larger display 105 than that of a smartphone such as a tablet terminal, by displaying three or more zoom frames, more zoom magnifications can be simultaneously checked, and convenience in imaging is further improved.

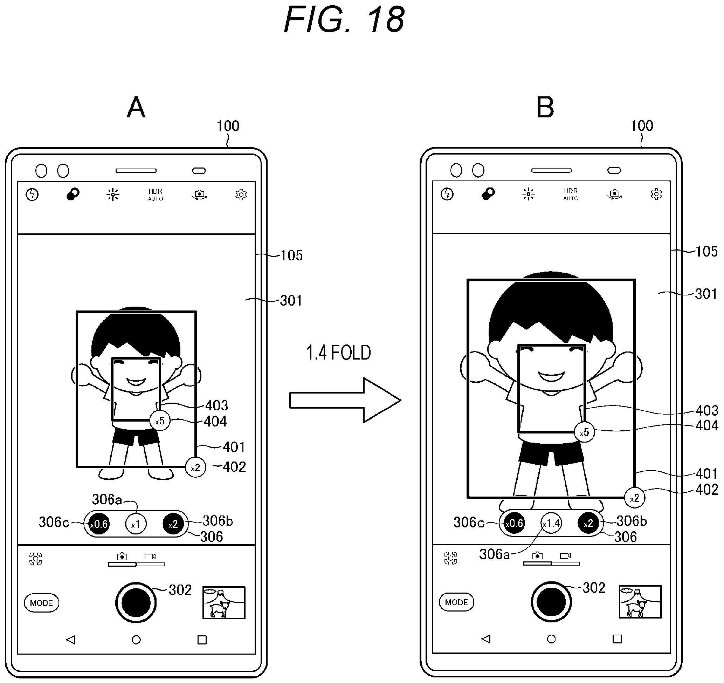

Furthermore, as illustrated in Fig. 18, in a case where the user adjusts the zoom magnification by another method, the information processing device 100 may determine the size of the first zoom frame 401 and the second zoom frame 403 according to the current zoom magnification.

Fig. 18 illustrates a case where the user adjusts the zoom magnification to 1.4 fold magnification as illustrated in Fig. 18B by another method from the state of unity zoom magnification as illustrated in Fig. 18A, and the subject in the through image display area 301 is displayed 1.4 fold. In this case, the information processing device 100 also displays the first zoom frame 401 and the second zoom frame 403 1.4 times larger than the size illustrated in Fig. 18A. Note that, the zoom magnification of the first zoom frame 401 and the zoom magnification of the second zoom frame 403 are not changed.

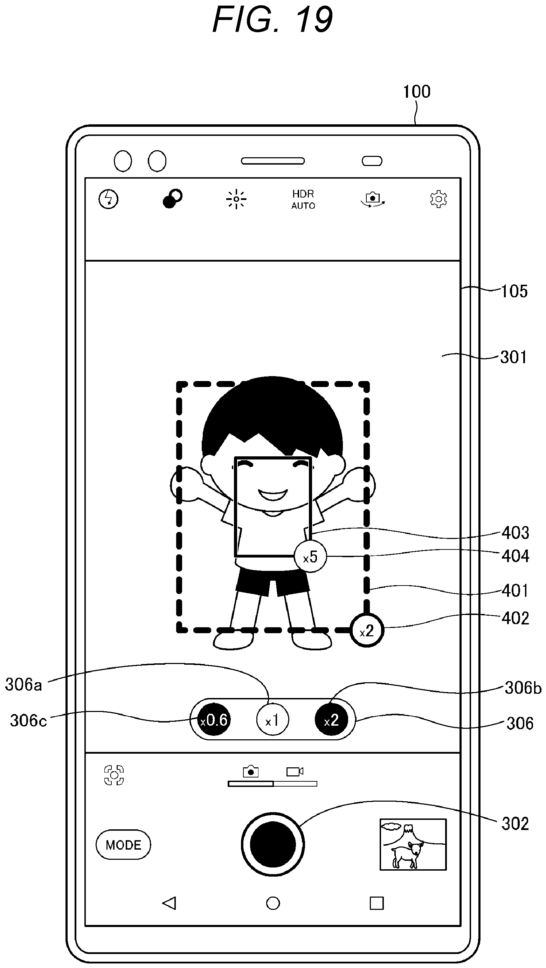

The display control unit 111 may change the display mode of the zoom frame according to the type of zooming. Specifically, in a case where the information processing device 100 can execute zooming by the zoom magnification of the zoom frame by optical zooming, the display control unit 111 may emphasize the zoom frame. In Fig. 19, the zoom magnification of the first zoom frame 401 is twofold magnification, and since twofold zooming can be executed by the optical zooming of the telephoto lens, the first zoom frame 401 is emphasized.

This is because the optical zooming can enlarge the subject while suppressing deterioration in image quality as compared with the digital zooming, so that, in a case where a zoom magnification desired by the user can be implemented by the optical zooming, it is preferable to image with the optical zooming.

The display of the zoom frame on the display 105 described above may be turned off by default, and on/off may be switched on the setting screen of the information processing device 100. Note that, the zoom frame may be displayed by default.

Furthermore, on the setting screen of the information processing device 100, it is preferable to change settings such as whether only the change in angle of view is executed or whether imaging is executed simultaneously with the change in angle of view with respect to the input to the selection button.

The zoom UI is displayed by the information processing device 100 in the above-described manner. According to the present technology, in a state in which the through image is displayed on the display 105, it is possible to easily check a state in which zooming is performed at a plurality of different zoom magnifications.

### <2. Variation>

Although the embodiment of the present technology is specifically described above, the present technology is not limited to the above-described embodiment, and various modifications based on the technical idea of the present technology are possible.

Although two zoom frames are described as a specific example and it is described that any number of zoom frames may be used as long as there is a plurality of zoom frames in the embodiment, an information processing device 100 can display one zoom frame.

Although still image imaging is taken as an example in the embodiment, the present technology is also applicable to moving image imaging. Note that, in a case where an input is performed on a selection button in moving image imaging, it is preferable that display of a through image display area 301 gradually transitions to a zoom magnification of a selected zoom frame as illustrated in Fig. 8. This is because, in a case of the moving image, when the zoom magnification is instantaneously switched, there is a possibility of giving an impression that the image is interrupted or the image has no continuity. Note that, even in a case of the moving image, the zoom magnification may be instantaneously switched.

In a case where there is an input to a shutter button 302 from a user, both an image enlarged to a zoom magnification of a zoom frame selected at that time and an image with a unity magnification using a standard lens may be simultaneously imaged.

Furthermore, in a case where there is the input to the shutter button 302 from the user, an image of an angle of view of the through image display area 301 at that time, an image enlarged to a zoom magnification of a first zoom frame 401, and an image enlarged to a zoom magnification of a second zoom frame 403 may be simultaneously imaged.

In a case where the information processing device 100 includes a plurality of lenses, it is possible to quickly switch the lenses by always turning on the plurality of lenses and a mechanism related to the lenses. In contrast, it is possible to reduce power consumption in the information processing device 100 by turning off a lens that is not used, a mechanism related to the lens and the like.

In the embodiment, it is described that the information processing device 100 includes a plurality of lenses of different types, but the information processing device 100 of the present technology can also operate in an information processing device including one lens.

The present technology can also have the following configurations.
(1) An information processing device configured to
   simultaneously display a plurality of frames corresponding to a plurality of zoom magnifications, respectively, in a camera on a display on which a through image is displayed.
(2) The information processing device according to (1), in which the through image zoomed at a zoom magnification corresponding to a frame selected by a user out of the plurality of frames is displayed on the display.
(3) The information processing device according to (1) or (2), in which, by a selection operation of a frame by a user, imaging by the camera is performed at a zoom magnification corresponding to the frame selected by the selection operation out of the plurality of frames.
(4) The information processing device according to any one of (1) to (3), configured to determine a zoom magnification corresponding to a frame on the basis of a current zoom magnification of the through image.
(5) The information processing device according to any one of (1) to (4), configured to determine, in a case where the camera can use a plurality of lenses, a zoom magnification corresponding to a frame on the basis of a type of a lens currently used by the camera.
(6) The information processing device according to any one of (1) to (5), configured to display a frame on the basis of a subject detected in the through image.
(7) The information processing device according to (6), configured to determine a display position of the frame on the basis of a position of the detected subject.
(8) The information processing device according to (6) or (7), configured to determine a zoom magnification corresponding to the frame on the basis of a size of the detected subject.
(9) The information processing device according to (6), configured to display the frame corresponding to each of a plurality of the detected subjects.
(10) The information processing device according to (6), configured to display the frame corresponding to the subject selected by a user out of a plurality of the detected subjects.
(11) The information processing device according to any one of (1) to (10), configured to determine a size of the frame on the basis of a current zoom magnification of the through image.
(12) The information processing device according to any one of (1) to (11), configured to emphasize a frame recommended to a user out of the plurality of frames.
(13) The information processing device according to (12), configured to emphasize, in a case where the plurality of frames is displayed corresponding to any one of a plurality of subjects detected in the through image, the frame not including the subject that does not correspond to the plurality of frames out of the plurality of frames.
(14) The information processing device according to (12), configured to emphasize, in a case where a speed of a subject detected in the through image is a threshold or higher, a larger frame out of the plurality of frames.
(15) The information processing device according to (12), configured to emphasize the frame corresponding to a zoom magnification executable by optical zooming.
(16) The information processing device according to any one of (1) to (15), in which a frame is displayed in a translucent state on the display.
(17) The information processing device according to any one of (1) to (16), configured to display a button to which a user inputs for selecting a frame on the display.
(18) The information processing device according to any one of (1) to (16), in which a frame to which a user performs an input at any position in the frame out of the plurality of frames is made a frame selected by the user.
(19) An information processing method configured to
   simultaneously display a plurality of frames corresponding to a plurality of zoom magnifications respectively, in a camera on a display on which a through image is displayed.
(20) A program that allows a computer to execute
   an information processing method of simultaneously displaying a plurality of frames corresponding to a plurality of zoom magnifications, respectively, in a camera on a display on which a through image is displayed.

### REFERENCE SIGNS LIST

- 100: Information processing device
- 105: Display
- 106: Camera
- 401: First zoom frame
- 402: First selection button
- 403: Second zoom frame
- 404: Second selection button

## Claims

1. An information processing device configured to
simultaneously display a plurality of frames corresponding to a plurality of zoom magnifications, respectively, in a camera on a display on which a through image is displayed.

2. The information processing device according to claim 1, wherein
the through image zoomed at a zoom magnification corresponding to a frame selected by a user out of the plurality of frames is displayed on the display.

3. The information processing device according to claim 1, wherein
by a selection operation of a frame by a user, imaging by the camera is performed at a zoom magnification corresponding to the frame selected by the selection operation out of the plurality of frames.

4. The information processing device according to claim 1, configured to
determine a zoom magnification corresponding to a frame on a basis of a current zoom magnification of the through image.

5. The information processing device according to claim 1, configured to
determine, in a case where the camera can use a plurality of lenses, a zoom magnification corresponding to a frame on a basis of a type of a lens currently used by the camera.

6. The information processing device according to claim 1, configured to
display a frame on a basis of a subject detected in the through image.

7. The information processing device according to claim 6, configured to
determine a display position of the frame on a basis of a position of the detected subject.

8. The information processing device according to claim 6, configured to
determine a zoom magnification corresponding to the frame on a basis of a size of the detected subject.

9. The information processing device according to claim 6, configured to
display the frame corresponding to each of a plurality of the detected subjects.

10. The information processing device according to claim 6, configured to
display the frame corresponding to the subject selected by a user out of a plurality of the detected subjects.

11. The information processing device according to claim 1, configured to
determine a size of the frame on a basis of a current zoom magnification of the through image.

12. The information processing device according to claim 1, configured to
emphasize a frame recommended to a user out of the plurality of frames.

13. The information processing device according to claim 12, configured to
emphasize, in a case where the plurality of frames is displayed corresponding to any one of a plurality of subjects detected in the through image, the frame not including the subject that does not correspond to the plurality of frames out of the plurality of frames.

14. The information processing device according to claim 12, configured to
emphasize, in a case where a speed of a subject detected in the through image is a threshold or higher, a larger frame out of the plurality of frames.

15. The information processing device according to claim 12, configured to
emphasize the frame corresponding to a zoom magnification executable by optical zooming.

16. The information processing device according to claim 1, wherein
a frame is displayed in a translucent state on the display.

17. The information processing device according to claim 1, configured to
display a button to which a user inputs for selecting a frame on the display.

18. The information processing device according to claim 1, wherein
a frame to which a user performs an input at any position in the frame out of the plurality of frames is made a frame selected by the user.

19. An information processing method configured to
simultaneously display a plurality of frames corresponding to a plurality of zoom magnifications respectively, in a camera on a display on which a through image is displayed.

20. A program that allows a computer to execute
an information processing method of
simultaneously displaying a plurality of frames corresponding to a plurality of zoom magnifications, respectively, in a camera on a display on which a through image is displayed.
